# EUROPEAN PATENT SPECIFICATION

(11) **EP 3 772 122 B1**
(45) Date of publication and mention of the grant of the patent: **20.07.2022**
(21) Application number: 19189508.5
(22) Date of filing: 01.08.2019
(51) Int. Cl.: H01M 10/6554, H01M 10/613, H01M 10/6556, H01M 50/20, H01M 10/04

(54) **BATTERY MODULE WITH A MULTIFUNCTIONAL END-PLATE**
BATTERIEMODUL MIT EINER MULTIFUNKTIONALEN ENDPLATTE
MODULE DE BATTERIE DOTÉ D'UNE PLAQUE D'EXTRÉMITÉ MULTIFONCTIONNELLE

(43) Date of publication of application: 03.02.2021
(73) Proprietor: Samsung SDI Co., Ltd., Gyeonggi-do 17084 (KR)
(72) Inventor: Rath, Helmut, 8481 St. Veit / Südstmk. (AT)
(74) Representative: Gulde & Partner

(56) References cited:
- EP-A1- 2 608 309
- DE-A1-102011 084 660
- US-A1- 2018 123 195
- US-A9- 2016 133 986

## Description

### Field of the Invention

The present invention relates to a battery module, and in particular to a battery module having at least one end-plate, wherein cooling connectors are integrated in the at least one end-plate.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e. g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side-plates to lateral sides of the carrier framework. Further, cover-plates may be fixed atop and below the battery modules.

A conventional battery module may include a plurality of battery cells aligned in one direction and a heat exchange member provided adjacent to a bottom surface of the plurality of battery cells. A pair of end-plates are provided to face wide surfaces of the battery cells at the outside of the battery cells.

Typically, a number of electric connectors is installed on at least one of the end-plates. For example, high voltage (HV) connectors are required to connect the battery module with an electric circuit to supply electric power to the electric circuit. Also, low voltage (LV) connectors are usually implemented to connect control or measurement means integrated in the battery module (e. g., temperature sensors, see below) with respective control devices such as a battery management system (BMS) or a battery management unit (BMU), which are briefly discussed below.

Further, the heat exchange member may be operated by using a cooling liquid or coolant. Due to a constant exchange of the cooling liquid or coolant in the heat exchange member, heat becomes discharged and/or dissipated away from the cells (see below for further details of a thermal management system of a battery module). To that end, at least one of the end-plates may be equipped with cooling connectors suitable for being connected with a coolant supply and/or a coolant discharge, which may be realized, for example, as hoses or pipes.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e. g. an electric vehicle. Thus, the replacement of defect system parts, e. g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection and sensing unit (CCU) of a battery submodule that interconnects the battery cells of the battery submodule.

Thus, the BMS/BMU is provided for managing the battery pack, such as by protecting the battery from operating outside its safe operating area, monitoring its state, calculating secondary data, reporting that data, controlling its environment, authenticating it and/or balancing it.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/ dissipating heat from the cells is required.

As described above, the end-plates of battery module are used for two purposes: (i) The end-plates serve to mechanically stabilize the position of the cells comprised in the battery module. (ii) The end-plates are equipped with various connectors that allow the battery module to get electrically connected with external entities such as electrical circuits or control devices as well as to be connected to a coolant supply and coolant discharge.

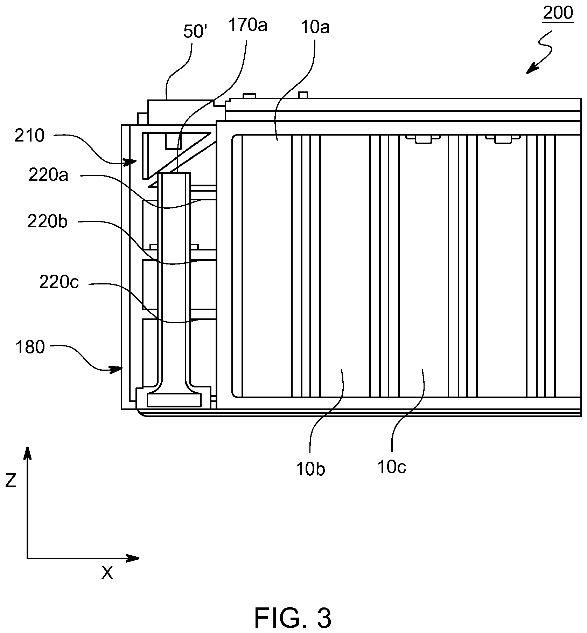

US 10,017,073 B2 describes a typical design of battery module having two end-plates, wherein one of the end-plates is equipped with coolant channels (coolant inlet and coolant outlet) formed as tubes having an elongated cylindrical shape orthogonally protruding from the end-plate (cf. FIG. 3 of the cited document).

The above-described construction of a battery module may suffer from a couple of drawbacks. (i) The complete design of the battery module is lengthened by the space required by the elongated cylindrical tubes. This, however, decreases considerably the capacity per volume of the battery module, as space is used for members that do not contribute to the capacity of the battery module. (ii) As the major part of the cooling connectors is arranged unsupported outside the end-plate, the cooling connectors are prone to snapping off due to mechanical forces that may be exerted, e. g., by a coolant supply / discharge being connected to the cooling connectors. Further, the space on the end-plate, where the cooling connectors are installed, is no longer usable for arranging other (smaller) connectors such as LV and/or HV connectors.

There are still other drawbacks known from the use of certain designs of battery modules. For example, end-plates are used that do not extend over the whole height and/or width of the adjacent battery cell. In this case, the mechanical stress caused by the expanding forces arising in the interior of the cells are not evenly absorbed by the end-plate, which may lead to bending stress in the surface of at least the battery cell adjacent to the end-plate.

It also happens that end-plates are bended due to the mechanical stress caused by the expanding forces arising in the interior of the cells, thus lowering the mechanical stability of the battery module as a whole.

DE 10 2011 084 660 A1 discloses a device for supplying voltage, in particular for supplying voltage to a motor vehicle, comprising a cell module having a plurality of memory cells arranged between a first and a second plate-like element, a plate-like heat sink thermally conductively connected to undersides of the memory cells, in the interior of which a cooling channel system is provided, which is in fluid communication with at least one cooling / refrigerant inlet and at least one cooling / refrigerant outlet. The at least one cooling / refrigerant inlet and the at least one cooling / refrigerant outlet are each arranged in the region of an upper side of the first and / or the second plate-like element.

US 2016 / 133 986 A9 relates to an energy storage module having a plurality of stacked flat cells. The energy storage module has an interconnection formed in such a way that the energy storage module can be connected mechanically, electrically and/or for exchanging coolant with at least one other energy storage module of the same kind.

US 2018 / 123 195 A1 deals with a cooling manifold for cooling battery modules in a battery housing of an electric vehicle is configured with a predetermined leak component arranged at a defined section of the cooling manifold that is outside of the battery housing. In response to crash forces, the predetermined leak component is configured to cause the liquid coolant to leak out of the defined section of the cooling manifold (e. g., to avoid flooding of the battery housing).

It is thus an object of the present invention to overcome or reduce at least some of the drawbacks of the prior art and to provide a battery module that in particular (i) allows for getting stably connected with a coolant supply / discharge and (ii) wherein no extra-space is required for the cooling connectors.

These objects are achieved by the battery module according to independent claim 1.

Embodiments of the present invention as disclosed in the following disclosure and/or the dependent claims seek to solve at least one of the problems existing in the prior art to at least some extent.

### Summary of Invention

Z The present invention is a battery module according to independent claim 1. Preferred embodiments are as defined in the dependent claims. The battery module comprises a plurality of battery cells, a first cooling connector and a second cooling connector, and a first end-plate and a second end-plate. Each of the battery cells has a front side, preferably a planar front side, and a rear side, preferably a planar rear side, being parallel to the front side of the battery cell. The battery cells are aligned along a predefined direction such that their respective front and rear sides are perpendicular to the predefined direction. For any two neighbored battery cells, when viewed into the predefined direction, the respective subsequent battery cell facing with its front side the rear side of the respective precedent battery cell. The first end-plate has a front side, preferably a planar front side, and a rear side, preferably a planar rear side, parallel to the front side of the first end-plate. The first end-plate is arranged such that its front and rear side is perpendicular to the predefined direction. The rear side of the first end-plate faces the front side of the first battery cell when viewed into the predefined direction.

Here, the term "first battery cell when viewed into the predefined direction" relates to the battery cell being adjacent to the first end-plate. The cooling connectors each have an elongated shape with a longitudinal center axis. One of the first and second cooling connectors being configured for getting connected with an external coolant supply, the other cooling connector being configured for getting connected with an external coolant discharge. The first cooling connector is integrated, preferably completely integrated, in the first end-plate. The longitudinal center axis of the first cooling connector is orientated perpendicular to the predefined direction. Further, the first end-plate comprises a first extrusion profile, wherein the pressing direction of the extrusion profile is perpendicular to the rear side of the first end-plate, and wherein on at least one step of the first extrusion profile, at least one HV connector is placed.

Here and in the following, the term "pressing direction" refers to the direction in which the profile is extruded during manufacture of the extrusion profile; thus, several steps are formed within the extrusion profile in the direction of the pressing-direction.

The battery module may have a cooling means for cooling the battery cells (e. g. a heat exchange member), and the cooling connectors may be linked or connected to the cooling means.

In one embodiment of the battery module according to the invention, the battery module further comprises a second end-plate. The second end-plate has a front side, preferably a planar front side, and a rear side, preferably a planar rear side, parallel to the front side of the second end-plate. The second end-plate is arranged such that its front and rear side is perpendicular to the predefined direction. The front side of the second end-plate faces the rear side of the last battery cell when viewed into the predefined direction (i. e., the battery cell adjacent to the second-end plate).

According to one embodiment of the battery module according to the invention, the second cooling connector is integrated, preferably completely integrated, in the first end-plate, and the longitudinal center axis of the second cooling connector is orientated perpendicular to the predefined direction.

According to one embodiment of the battery module according to the invention, the second cooling connector is integrated, preferably completely integrated, in the second end-plate, and wherein the longitudinal center axis of the second cooling connector is orientated perpendicular to the predefined direction.

According to one embodiment of the battery module according to the invention, each cooling connector is realized by a bore-hole or cut-out in the end-plate, in which the cooling connector is integrated.

According to one embodiment of the battery module according to the invention, each cooling connector is arranged in a bore-hole or cut-out in the end-plate, in which the cooling connector is integrated, and wherein preferably each cooling connector comprises a tube or pipe made from a liquid-proof material such as a tube made of rubber, plastic, for example PET, or metal.

The thickness of the end-plate(s) must be chosen depending on the cell-swelling force and width of the cells.

According to one embodiment of the battery module according to the invention, the thickness of first end-plate (the thickness of the first end-plate being defined as the distance between the front side and the rear side of the first end-plate) is at least 32 mm, preferably at least 38 mm, and most preferably 40 mm.

According to one embodiment of the battery module according to the invention, the thickness of the second end-plate (the thickness of the second end-plate being defined as the distance between the front side and the rear side of the second end-plate) is at least 20 mm, preferably at least 30 mm. Alternatively, the thickness of the second end-plate may be equal to the thickness of the first end-plate.

For the following, the term "first direction" refers to the predefined direction, a second direction be defined perpendicular to the first direction, and a third direction be defined perpendicular to the first direction and the second direction.

Then, according to one embodiment of the battery module according to the invention, each of the battery cells has a cuboidal shape (i. e., a cuboid-like or ashlar-like shape) having first edges being parallel to the first direction, second edges parallel to the second direction and third edges parallel to the third direction. The first end-plate has a cuboidal shape having first edges being parallel to the first direction, second edges parallel to the second direction and third edges parallel to the third direction.

According to one embodiment of the battery module according to the invention, the second end-plate has a cuboidal shape having first edges being parallel to the first direction, second edges parallel to the second direction and third edges parallel to the third direction.

According to one embodiment of the battery module according to the invention, the heights (i. e. the size in the second direction) of each of the battery cells and the height (i. e. the size in the second direction) of the first end-plate equal each other.

According to one embodiment of the battery module according to the invention, the widths (i. e. the size in the third direction) of each of the battery cells and the width (i. e. the size in the third direction) of the first end-plate equal each other.

According to one embodiment of the battery module according to the invention, the heights (i. e. the size in the second direction) of each of the battery cells and the height (i. e. the size in the second direction) of the second end-plate equal each other.

According to one embodiment of the battery module according to the invention, the widths (i. e. the size in the third direction) of each of the battery cells and the width (i. e. the size in the third direction) of the second end-plate equal each other.

For the following, the height of each of the battery cells and the end-plate(s) be defined as its respective length along the second direction.

Then, according to one embodiment of the battery module according to the invention, the height of the first end-plate is equal to the height of the first (i. e., neighbored to the first end-plate) battery cell when viewed in the first direction.

According to one embodiment of the battery module according to the invention, the height of the second end-plate is equal to the height of the last (i. e., neighbored to the second end-plate) battery cell when viewed in the first direction.

For the following, the width of each of the battery cells and the end-plate(s) be defined as its length along the third direction.

Then, according to one embodiment of the battery module according to the invention, the width of the first end-plate is equal to the width of the first (i. e., neighbored to the first end-plate) battery cell when viewed in the first direction.

According to one embodiment of the battery module according to the invention, the width of the second end-plate is equal to the width of the last (i. e., neighbored to the second end-plate) battery cell when viewed in the first direction.

According to one embodiment of the battery module according to the invention, the first extrusion profile is an aluminum extrusion profile.

According to one embodiment of the battery module according to the invention, the second end-plate comprises a second extrusion profile, preferably being an aluminum extrusion profile, wherein the pressing direction of the extrusion profile is perpendicular to the front side of the second end-plate.

According to one embodiment of the battery module according to the invention, on at least one step of the second extrusion profile, at least one HV connector is placed.

The HV connector may be integrated in the end-plate by a cut-out or placed on a step in the extrusion-profile geometry. Then, the HV connectors are positioned between the front side and rear side of the respective end-plates and accessible from a direction perpendicular to the predefined / first direction. Preferably, a HV connector is placed on a step close to the edge of the extrusion profile, then, the access to the HV is simplified.

According to one embodiment of the battery module according to the invention, on at least one step of the first extrusion profile, at least one low voltage (LV) connector is placed.

According to one embodiment of the battery module according to the invention, on at least one step of the second extrusion profile, at least one LV connector is placed.

The LV connector can be integrated in the end-plate by a cut-out or placed on a step in the extrusion-profile geometry. Then, the LV connectors are positioned between the front side and rear side of the respective end-plates and accessible from a direction perpendicular to the predefined / first direction. Preferably, a LV connector is placed on a step close to the edge of the extrusion profile, then, the access to the HV is simplified.

According to one embodiment of the battery module according to the invention, at least one HV connector is arranged on the front side of the first end-plate. Then, the thickness of the end-plates is then preferably sufficient to integrate the HV connector in front of the cells.

According to one embodiment of the battery module according to the invention, at least one HV connector is arranged on the rear side of the second end-plate. Then, the thickness of the end-plates is then preferably sufficient to integrate the HV connector in front of the cells.

According to one embodiment of the battery module according to the invention, at least one LV connector is arranged on the front side of the first end-plate. Then, the thickness of the end-plates is then preferably sufficient to integrate the LV connector in front of the cells.

According to one embodiment of the battery module according to the invention, at least one LV connector is arranged on the rear side of the second end-plate. Then, the thickness of the end-plates is then preferably sufficient to integrate the LV connector in front of the cells.

Embodiments of the invention provide a multifunctional design of end-plates that enables an integration of the cooling connector(s) and HV/LV-interface(s) above or within the end-plates space and to distribute evenly the mechanical stress onto the top area of the first and last cells.

Embodiments of the invention in particular comprise the following advantages in respect to the prior art:
- Harmonizing of the mechanical stress on the last/first cell with the higher end-plate.
- The integration of the cooling connector(s) is smaller than a succession arrangement.
- The increased thickness of the end-plate decreases the bending of the end-plates.
- The cutout for the cooling-connector give them also a mechanical protection.
- There is more space available for positioning of HV and LV connectors in front of the cells.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates schematically a 3-dimensional view of a typical design of a conventional battery module;
- Fig. 2A: illustrates a schematic front view of a further typical design of a conventional battery module;
- Fig. 2B: illustrates a schematic cross-sectional view of a typical design of a conventional battery module;
- Fig. 3: illustrates a schematic cross-sectional view of a part of one embodiment of a battery module according to the invention;
- Fig. 4: illustrates a schematic top view of a part of one embodiment of a battery module according to the invention; and
- Fig. 5: illustrates a schematic front view of a part of one embodiment of a battery module according to the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e. g., rotated 90 degrees or at other orientations) and the spatially relative descriptors used herein should be interpreted accordingly.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of ±5% of the value centered on the value. Further, the use of "may" when describing embodiments of the present invention refers to "one or more embodiments of the present invention." Herein, the terms "upper" and "lower" are defined according to the z-axis. For example, the cover is positioned at the upper part of the z-axis, whereas the ground plate is positioned at the lower part thereof.

Also, for the sake of brevity and increased intelligibility, the shorter terms "cell" and "module" may be used in lieu of the expressions "battery cell" and "battery module," respectively.

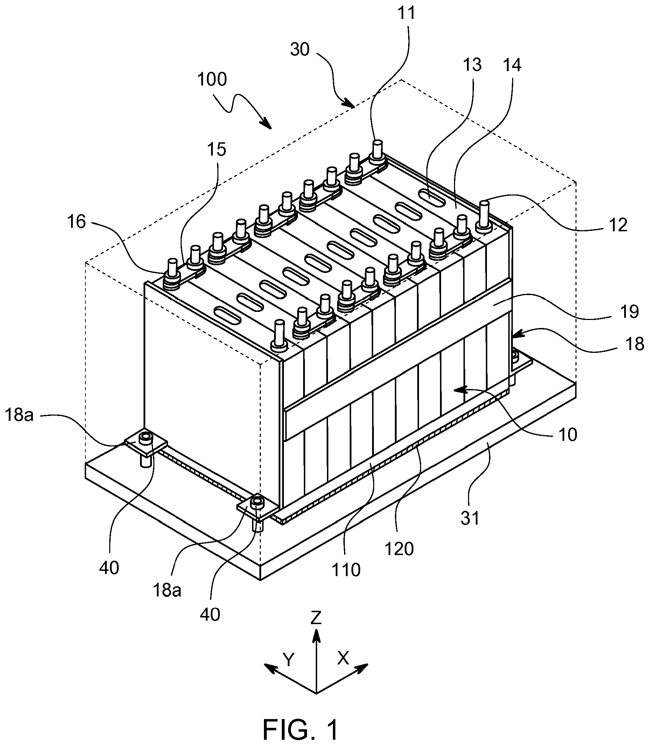

Fig. 1 is a schematic 3-dimensional view of a typical design of a battery module according to the state of the art. Referring to Fig. 1, an exemplary embodiment of a conventional battery module 100 includes a plurality of battery cells 10 aligned in one direction and a heat exchange member 110 provided adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a support plate 31 by bolts 40. The support plate 31 is part of a housing 30.

Here, each battery cell 10 is an essentially prismatic or essentially cuboidal-shaped cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle.

Generally, the battery cells 10 generate a large amount of heat while being charged/discharged. The generated heat is accumulated in the battery cells 10, thereby accelerating the deterioration of the battery cells 10. Therefore, the battery module 100 further includes a heat exchange member 110, which is provided adjacent to the bottom surface of the battery cells 10 so as to cool down the battery cells 10. In addition, an elastic member 120 made of rubber or other elastic materials may be interposed between the support plate 31 and the heat exchange member 110.

The heat exchange member 110 may include a cooling plate provided to have a size corresponding to that of the bottom surface of the plurality of battery cells 10, e. g., the cooling plate may completely overlap the entire bottom surfaces of all the battery cells 10 in the battery module 100. The cooling plate usually includes a passage through which a cooling liquid or coolant can move. The coolant performs a heat exchange with the battery cells 10 while circulating inside the heat exchange member 110, i. e., inside the cooling plate. Cooling connectors (not shown in Fig. 1) are provided, preferably on one or both of the end-plates, to allow for connecting the inlet of the passage with a coolant supply and for connecting the outlet of the passage with a coolant discharge.

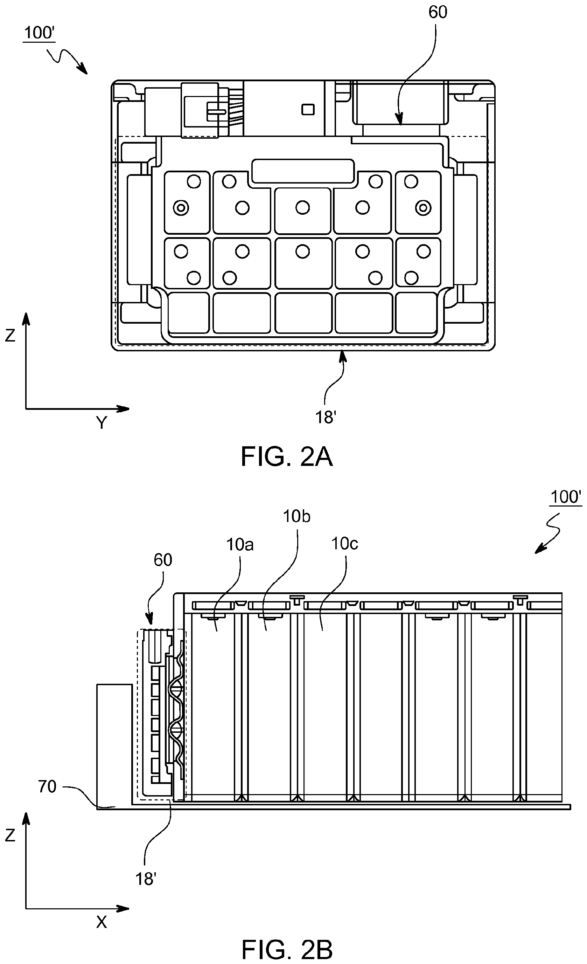

Figs. 2A and 2B show a front view and a part of a cross-sectional view of a further typical design of a conventional battery module 100'. A plurality of battery cells 10a, 10b, 10c, ... are aligned in a predefined direction X, starting with the cell 10a, in the following called the "first battery cell," which means that cell 10a is the first battery cell in the stack when one views at the stack of cells 10a, 10b, 10c, ... in the predefined direction X. Adjacent to the first battery cell 10a, an end-plate 18' (marked in the figures by the dotted lines) is arranged. Both, the battery cells 10a, 10b, 10c, ... and the end-plate 18' are shaped as cuboids. However, whereas the battery cells 10a, 10b, 10c, ... are formed identical to each other and, in particular, exhibit the same height (the height being defined as the size in the direction Z), the height of the end-plate 18' is significantly smaller. On top of the end-plate 18', a high voltage (HV) contact surface 60 is positioned, which is electrically connected to a terminal of the first battery cell 10a, and which enables the battery module 100' to be electrically connected to an external circuit.

However, a consequence of the design of conventional battery module 100' is that the top part of the front side of the first cell 10a (i. e., the first cell's side facing the end-plate 18') is not completely covered by the end-plate 18'. Thus, mechanical stress - so-called "cell swelling forces" arising from chemical processes in the interior of cells 10a, 10b, 10c, ... and causing the front side of the first cell 10a to be pressed against end-plate 18' - is only absorbed in the area of the end-plate 18'; in the top area of the first cell 10a, however, no counterforce by the end-plate 18' is available, resulting in a bending of the top part of the first cell 10a. In other words, there is a high probability that at least the first battery cell 10a of battery module 100' is distorted in use. Those mechanical distortions of cells, however, may seriously jeopardize the functioning of the whole battery module, as malfunctions up to a thermal run-away may occur.

Another drawback is the extra-space 70 in front of the end-plate 18' that is required for the accommodation of one of more cooling connectors (not shown in the figures). This enlarges significantly the overall space of conventional battery module 100'. This runs counter to the goal of achieving a high level of capacity per volume for a battery module, as the extra-space 70 is lost with regard to the storage of energy.

To summarize the above: The state of the art design of a battery module 100' as depicted in Figs. 2A and 2B includes a small end-plate 18' which is lower than the first cell 10a. Consequently, the cell swelling forces cause a higher mechanical stress onto the top area of the first cell (and in case of a symmetric arrangement of end-plates, also onto the top area of the last cell; not shown). Furthermore, additional space for the cooling connector(s) is necessary.

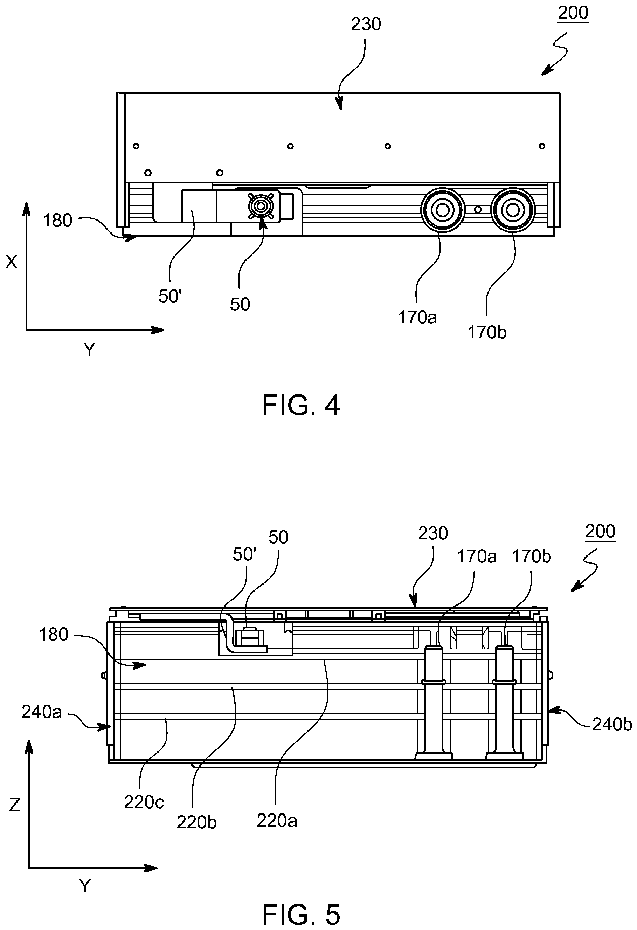

Figs. 3 to 5 show, respectively, a cross-section view, a top view, and a front view of (a part of) one embodiment of a battery module 200 according to the invention. Again, a plurality of battery cells 10a, 10b, 10c, ... are aligned in a predefined direction X, starting with the cell 10a, in the following called the "first battery cell," which means that cell 10a is the first battery cell in the stack when one views at the stack of cells 10a, 10b, 10c, ... in the predefined direction X. Adjacent to the first battery cell 10a, an end-plate 180 is arranged. In Figs. 4 and 5, the end-plate 180 is depicted in a transparent manner in order to illustrate the inner construction of the end-plate.

The stack of battery cells 10a, 10b, 10c, ... is covered at the top side with a cover-plate 230 and at the lateral sides with lateral side-plates 240a and 240b. At its side opposite to the side facing the end-plate 180, the stack of battery cells 10a, 10b, 10c, ... may be covered by a conventional end-plate or by a second end-plate (not shown in the figures) being similar to the end-plate 180 being shown in the figures and described below in further detail, the second end-plate, of course, being a symmetrically (with regard to a plane perpendicular to the X-axis) mirrored version of one of the below described versions of the shown end-plate 180.

The height of the end-plate 180 is equal to the height of a front side of the first cell 10a (i. e., the first cell's side facing the end-plate 180). Consequently, the front side of the first cell 10 is completely covered by the end-plate 180, which therefore is capable to evenly / uniformly absorb or alleviate forces that press the front side of first cell 10a in the direction of the end-plate 180. Vice-verse, the mechanical stress exerted from the end-plate onto the first cell 10a is distributed evenly from top to bottom of the first cell 10a. Hence, a bending of first cell 10a - as described above in the context of the prior art as depicted in Figs. 2A and 2B - is avoided.

To further stabilize the cells 10a, 10b, 10c, ... aligned in the stack (for example, to avoid bending of the first battery cell that may occur, due to pressure in the interior of the cells, in the middle portion of the cell's front side in spite of the coverage by the end-plate, thereby also distorting the end-plate itself), the thickness of the end-plate 180 may be enlarged. To save material and to avoid an increased weight, the end-plate 180 is then advantageously manufactured as an extrusion profile 210, for example an aluminum (Al) extrusion profile. The steps 220a, 220b, 220c of the extrusion profile are preferably arranged parallel to the direction of the pressure exerted by the first cell 10a on the end-plate 180, i. e., the pressing-direction of steps 220a, 220b, 220c is parallel to the X-axis. This arrangement increases the bending stiffness of the extrusion profile compared to a pressing-direction perpendicular to the X-axis.

Although in this case, the thickness of the end-plate 180 may be enlarged in comparison to the prior art as depicted, for example, in Figs. 2A and 2B, the overall length of the battery module 200 may nevertheless be decreased (in direction X) in comparison to the conventional battery module 100' in that the cooling connectors 170a, 170b are integrated in the end-plate 180 of the battery module 200 according to the invention. The accommodation of the cooling connectors 170a, 170b may be achieved by cylindrical (circular in the cross-section as depicted in Fig. 4) cut-outs in the extrusion profile 210, as shown, e. g., in Figs. 3 and 5.

However, not only is it possible to avoid any extra-space for the cooling connectors (see reference sign 70 in Figs. 2A and 2B in the context of the prior art) by the battery module 200 according to an embodiment of the invention - the battery module 200 at the same time provides an improved mechanical stability to the cooling connectors 170a, 170b, which are completely protected against external mechanical impacts - such as hits or thrusts - by the surrounding end-plate 180. This further improves the reliability of the functioning of the device. In other words, the thickness of the extrusion profile 210 is chosen such as to provide space for the cooling connectors 170a, 170b and to enhance the stiffness in the in the area of the cylindrical cut-outs for the cooling connectors 170a, 170b.

A further advantageous aspect of the design of the battery module 200 is that the area on the front side of the end-plate 180 (i. e., the end-plate's side opposite to the end-plate's side facing the adjacent battery cell 10a) is not occupied by cooling connectors and may be thus be used to arrange - usually, compared to cooling connectors, less space consuming - low voltage (LV) or high voltage (HV) connectors.

In case the end-plate 180 comprises an extrusion profile 210 (see above), several steps 220a, 220b, 220c of the extrusion profile 210 are available. This opens another possibility for accommodating LV or HV connectors in the battery module 200, viz. to place the LV and/or HV connectors on steps of the extrusion profile. It is advantageous to use a step close to an edge of the end-plate 180 therefor, as this facilitates the access to the respective LV or HV connector. However, also other steps may be used for this purpose. In Figs. 3 to 5, an HV connector 50 is shown that is positioned on the highest (with regard to the Z-direction) step 220a of the extrusion profile 210 comprised in the end-plate. Inside the battery module 200, the HV connector 50 is electrically connected to (a terminal, not shown, of) the first battery cell 10a via a suitable conductor 50'.

In other words, using an extrusion profile not only provides an end-plate exhibiting an improved stability (see above), but also allows for further reduction of space required for electrical connectors in that the void spaces being inherent in an extrusion profile are utilized for accommodating at least part of those electrical connectors.

### Reference signs

- 10: battery cells
- 10a, 10b, 10c: battery cell
- 11, 12: electrode terminals
- 13: vent
- 14: cap assembly
- 15: busbar
- 16: nut
- 18: pair of end-plates
- 18': end-plate
- 18a: fastening portion
- 19: connection plate
- 30: housing
- 31: support plate
- 40: bolt
- 50: high voltage (HV) connector
- 50': conductor for high voltage (HV) connector
- 60: high voltage (HV) contact surface
- 70: space for cooling connector(s)
- 100, 100': conventional battery module
- 110: heat exchange member
- 120: elastic member
- 150: high voltage (HV) connector
- 170a, 170b: cooling connectors
- 180: end-plate (shown transparently)
- 200: battery module
- 210: extrusion profile
- 220a, 220b, 220c: steps of the extrusion profile
- 230: cover-plate
- 240a, 240b: lateral side-plates

## Claims

1. A battery module (200), comprising:
a plurality of battery cells (10a, 10b, 10c),
a first cooling connector (170a) and a second cooling connector (170b), and
a first end-plate (180) and a second end-plate;
each of the battery cells (10a, 10b, 10c) having a front side and a rear side being parallel to the front side; the battery cells being aligned along a predefined direction (X) such that respective front and rear sides of the battery cells are perpendicular to the predefined direction (X); and for any two neighbored battery cells, when viewed into the predefined direction, the respective subsequent battery cell facing with its front side to the rear side of the respective precedent battery cell;
the first end-plate (180) having a front side and a rear side parallel to the front side of the first end-plate; the first end-plate being arranged such that the front side and rear side of the first end-plate are perpendicular to the predefined direction (X); and the rear side of the first end-plate facing the front side of the first battery cell, when viewed into the predefined direction (X);
the cooling connectors (170a, 170b) each having an elongated shape with a longitudinal center axis, one of the first and second cooling connectors being configured for getting connected with an external coolant supply, the other cooling connector being configured for getting connected with an external coolant discharge;
wherein the first cooling connector is integrated in the first end-plate (180), and wherein the longitudinal center axis of the first cooling connector is orientated perpendicular to the predefined direction (X),
wherein the first end-plate comprises a first extrusion profile having a plurality of steps, and
wherein each cooling connector is realized by a bore-hole or cut-out in the plurality of steps, in which the cooling connector is integrated.

2. The battery module according to claim 1, wherein:
the second end-plate has a front side and a rear side parallel to the front side of the second end-plate;
the second end-plate is arranged such that the front and rear sides of the second end-plate are perpendicular to the predefined direction; and
the front side of the second end-plate faces the rear side of the last battery cell, when viewed into the predefined direction.

3. The battery module according to claim 1 or 2, wherein the second cooling connector is integrated in the first end-plate, and wherein the longitudinal center axis of the second cooling connector is orientated perpendicular to the predefined direction.

4. The battery module according to claim 2, wherein the second cooling connector is integrated in the second end-plate, and wherein the longitudinal center axis of the second cooling connector is orientated perpendicular to the predefined direction.

5. The battery module according to any one of claims 1 to 4, wherein each cooling connector comprises a tube or pipe made from a liquid-proof material including rubber, plastic, or metal.

6. The battery module according to any one of claims 1 to 5, wherein the thickness of first end-plate defined as the distance between the front side and the rear side of the first end-plate is at least 32 mm, preferably at least 38 mm, and most preferably 40 mm;
and/or, as far as this claim depends on claim 2, the thickness of the second end-plate defined as the distance between the front side and the rear side of the second end-plate is at least 20 mm, preferably at least 30 mm, and is most preferably equal to the thickness of the first end-plate.

7. The battery module according to any one of claims 1 to 6, wherein, with a first direction being defined as the predefined direction, a second direction being defined perpendicular to the first direction and a third direction being defined perpendicular to the first direction and the second direction,
each of the battery cells has a cuboidal shape having first edges being parallel to the first direction, second edges parallel to the second direction and third edges parallel to the third direction;
the first end-plate has a cuboidal shape having first edges being parallel to the first direction, second edges parallel to the second direction and third edges parallel to the third direction; and
wherein, as far as this claim depends on claim 2, the second end-plate has a cuboidal shape having first edges being parallel to the first direction, second edges parallel to the second direction and third edges parallel to the third direction.

8. The battery module according to claim 7, wherein, with the height of each of the battery cells and the end-plate(s) defined as its respective length along the second direction,
the height of the first end-plate is equal to the height of the first battery cell when viewed in the first direction; and/or
as far as this claim depends on claim 2, the height of the second end-plate is equal to the height of the last battery cell when viewed in the first direction.

9. The battery module according to claim 7 or 8, wherein, with the width of each of the battery cells and the end-plate(s) defined as its length along the third direction,
the width of the first end-plate is equal to the width of the first battery cell when viewed in the first direction; and/or
as far as this claim depends on claim 2, the width of the second end-plate is equal to the width of the last battery cell when viewed in the first direction.

10. The battery module according to any one of claims 1 to 9, wherein the first extrusion profile is an aluminum extrusion profile, wherein the pressing direction of the extrusion profile is perpendicular to the rear side of the first end-plate; and/or
wherein the second end-plate comprises a second extrusion profile, preferably being an aluminum extrusion profile, wherein the pressing direction of the extrusion profile is perpendicular to the front side of the second end-plate.

11. The battery module according to claim 10, wherein on at least one step of the first extrusion profile, at least one HV connector is placed; and/or
wherein on at least one step of the second extrusion profile, at least one HV connector is placed.

12. The battery module according to claim 10 or 11, wherein on at least one step of the first extrusion profile, at least one LV connector is placed; and/or
wherein on at least one step of the second extrusion profile, at least one LV connector is placed.

13. The battery module according to any one of claims 1 to 12,
wherein at least one LV connector is arranged on the front side of the first end-plate; and/or
wherein at least one LV connector is arranged on the rear side of the second end-plate.

## Patentansprüche

1. Batteriemodul (200), umfassend:
mehrere Batteriezellen (10a, 10b, 10c),
einen ersten Kühlanschluss (170a) und einen zweiten Kühlanschluss (170b), und
eine erste Endplatte (180) und eine zweite Endplatte;
wobei jede der Batteriezellen (10a, 10b, 10c) eine Vorderseite und eine Rückseite aufweist, die parallel zur Vorderseite liegen; wobei die Batteriezellen entlang einer vordefinierten Richtung (X) so ausgerichtet sind, dass die jeweiligen Vorder- und Rückseiten der Batteriezellen senkrecht zu der vordefinierten Richtung (X) liegen; und wobei für zwei beliebige benachbarte Batteriezellen, wenn sie in der vordefinierten Richtung betrachtet werden, die jeweilige nachfolgende Batteriezelle mit ihrer Vorderseite der Rückseite der jeweiligen vorhergehenden Batteriezelle zugewandt ist;
wobei die erste Endplatte (180) eine Vorderseite und eine Rückseite parallel zu der Vorderseite der ersten Endplatte aufweist; die erste Endplatte so angeordnet ist, dass die Vorderseite und die Rückseite der ersten Endplatte senkrecht zu der vordefinierten Richtung (X) liegen; und die Rückseite der ersten Endplatte der Vorderseite der ersten Batteriezelle zugewandt ist, wenn sie in der vordefinierten Richtung (X) betrachtet wird;
wobei die Kühlanschlüsse (170a, 170b) jeweils eine längliche Form mit einer Längsmittelachse aufweisen, wobei einer der ersten und zweiten Kühlanschlüsse so konfiguriert ist, dass er mit einer externen Kühlmittelzufuhr verbunden wird, und der andere Kühlanschluss so konfiguriert ist, dass er mit einem externen Kühlmittelablauf verbunden wird;
wobei der erste Kühlanschluss in die erste Endplatte (180) integriert ist, und wobei die Längsmittelachse des ersten Kühlanschlusses senkrecht zur der vordefinierten Richtung (X) ausgerichtet ist;
die erste Endplatte ein erstes Strangpressprofil mit einer Vielzahl von Stufen aufweist, und
wobei jeder Kühlanschluss durch eine Bohrung oder einen Ausschnitt in der Vielzahl von Stufen verwirklicht wird, in denen der Kühlanschluss integriert ist.

2. Batteriemodul nach Anspruch 1, wobei:
die zweite Endplatte eine Vorderseite und eine Rückseite parallel zur Vorderseite der zweiten Endplatte aufweist;
die zweite Endplatte so angeordnet ist, dass die Vorder- und Rückseiten der zweiten Endplatte senkrecht zu der vordefinierten Richtung liegen; und
die Vorderseite der zweiten Endplatte der Rückseite der letzten Batteriezelle zugewandt ist, wenn man sie in der vorgegebenen Richtung betrachtet.

3. Batteriemodul nach Anspruch 1 oder 2, wobei der zweite Kühlanschluss in die erste Endplatte integriert ist und wobei die Längsmittelachse des zweiten Kühlanschlusses senkrecht zu der vordefinierten Richtung ausgerichtet ist.

4. Batteriemodul nach Anspruch 2, wobei der zweite Kühlanschluss in die zweite Endplatte integriert ist und wobei die Längsmittelachse des zweiten Kühlanschlusses senkrecht zu der vordefinierten Richtung ausgerichtet ist.

5. Batteriemodul nach einem der Ansprüche 1 bis 4, wobei jeder Kühlanschluss ein Rohr oder eine Röhre aus einem flüssigkeitsdichten Material einschließlich Gummi, Kunststoff oder Metall umfasst.

6. Batteriemodul nach einem der Ansprüche 1 bis 5, wobei die Dicke der ersten Endplatte, definiert als der Abstand zwischen der Vorderseite und der Rückseite der ersten Endplatte, mindestens 32 mm, vorzugsweise mindestens 38 mm und am meisten bevorzugt 40 mm beträgt;
und/oder, soweit dieser Anspruch von Anspruch 2 abhängt, die Dicke der zweiten Endplatte, definiert als der Abstand zwischen der Vorderseite und der Rückseite der zweiten Endplatte, mindestens 20 mm, vorzugsweise mindestens 30 mm, beträgt und am meisten bevorzugt gleich der Dicke der ersten Endplatte ist.

7. Batteriemodul nach einem der Ansprüche 1 bis 6, wobei eine erste Richtung als die vordefinierte Richtung definiert ist, eine zweite Richtung senkrecht zu der ersten Richtung definiert ist und eine dritte Richtung senkrecht zu der ersten Richtung und der zweiten Richtung definiert ist,
jede der Batteriezellen eine quaderförmige Form mit ersten Kanten aufweist, die parallel zur ersten Richtung liegen, zweiten Kanten, die parallel zur zweiten Richtung liegen, und dritten Kanten, die parallel zur dritten Richtung liegen;
die erste Endplatte eine quaderförmige Form mit ersten Kanten aufweist, die parallel zur ersten Richtung liegen, zweiten Kanten, die parallel zur zweiten Richtung liegen, und dritten Kanten, die parallel zur dritten Richtung liegen; und
wobei, soweit dieser Anspruch von Anspruch 2 abhängt, die zweite Endplatte eine quaderförmige Form aufweist, deren erste Kanten parallel zur ersten Richtung liegen, zweite Kanten parallel zur zweiten Richtung liegen und dritte Kanten parallel zur dritten Richtung liegen.

8. Batteriemodul nach Anspruch 7, wobei die Höhe jeder der Batteriezellen und der Endplatte(n) als ihre jeweilige Länge entlang der zweiten Richtung definiert ist und die Höhe der ersten Endplatte gleich der Höhe der ersten Batteriezelle bei Betrachtung in der ersten Richtung ist; und/oder
soweit dieser Anspruch von Anspruch 2 abhängt, die Höhe der zweiten Endplatte gleich der Höhe der letzten Batteriezelle bei Betrachtung in der ersten Richtung ist.

9. Batteriemodul nach Anspruch 7 oder 8, wobei die Breite jeder der Batteriezellen und der Endplatte(n) als ihre Länge entlang der dritten Richtung definiert ist und die Breite der ersten Endplatte gleich der Breite der ersten Batteriezelle bei Betrachtung in der ersten Richtung ist; und/oder
soweit dieser Anspruch von Anspruch 2 abhängt, die Breite der zweiten Endplatte gleich der Breite der letzten Batteriezelle bei Betrachtung in der ersten Richtung ist.

10. Batteriemodul nach einem der Ansprüche 1 bis 9, wobei das erste Strangpressprofil ein Aluminium-Strangpressprofil ist, wobei die Pressrichtung des Strangpressprofils senkrecht zur Rückseite der ersten Endplatte verläuft; und/oder
wobei die zweite Endplatte ein zweites Strangpressprofil umfasst, vorzugsweise ein Aluminium-Strangpressprofil, wobei die Pressrichtung des Strangpressprofils senkrecht zur Vorderseite der zweiten Endplatte verläuft.

11. Batteriemodul nach Anspruch 10, wobei auf mindestens einer Stufe des ersten Strangpressprofils mindestens ein HV-Verbinder angeordnet ist; und/oder
wobei auf mindestens einer Stufe des zweiten Strangpressprofils mindestens ein HV-Verbinder angeordnet ist.

12. Batteriemodul nach Anspruch 10 oder 11, wobei auf mindestens einer Stufe des ersten Strangpressprofils mindestens ein Niederspannungsanschluss angeordnet ist; und/oder
wobei auf mindestens einer Stufe des zweiten Strangpressprofils mindestens ein Niederspannungsanschluss angeordnet ist.

13. Batteriemodul nach einem der Ansprüche 1 bis 12,
wobei mindestens ein Niederspannungsanschluss an der Vorderseite der ersten Endplatte angeordnet ist; und/oder
wobei mindestens ein Niederspannungsanschluss auf der Rückseite der zweiten Endplatte angeordnet ist.

## Revendications

1. Module de batterie (200), comprenant :
une pluralité d'éléments de batterie (10a, 10b, 10c),
un premier connecteur de refroidissement (170a) et un second connecteur de refroidissement (170b), et
une première plaque d'extrémité (180) et une seconde plaque d'extrémité ;
chacun des éléments de batterie (10a, 10b, 10c) ayant un côté avant et un côté arrière parallèle au côté avant ; les éléments de batterie étant alignés le long d'une direction prédéfinie (X) de sorte que les côtés avant et arrière respectifs des éléments de batterie soient perpendiculaires à la direction prédéfinie (X) ; et, pour deux éléments de batterie voisins quelconques, lorsque l'on regarde dans la direction prédéfinie, l'élément de batterie suivant respectif faisant face, avec son côté avant, au côté arrière de l'élément de batterie précédent respectif ;
la première plaque d'extrémité (180) ayant un côté avant et un côté arrière parallèle au côté avant de la première plaque d'extrémité ; la première plaque d'extrémité étant disposée de sorte que le côté avant et le côté arrière de la première plaque d'extrémité soient perpendiculaires à la direction prédéfinie (X) ; et le côté arrière de la première plaque d'extrémité faisant face au côté avant du premier élément de batterie, lorsque l'on regarde dans la direction prédéfinie (X);
les connecteurs de refroidissement (170a, 170b) ayant chacun une forme allongée avec un axe central longitudinal, l'un des premier et second connecteurs de refroidissement étant configuré pour être relié à une alimentation externe en liquide de refroidissement, l'autre connecteur de refroidissement étant configuré pour être relié à une évacuation externe de liquide de refroidissement;
dans lequel le premier connecteur de refroidissement est intégré à la première plaque d'extrémité (180), et dans lequel l'axe central longitudinal du premier connecteur de refroidissement est orienté perpendiculairement à la direction prédéfinie (X),
dans lequel la première plaque d'extrémité comprend un premier profil d'extrusion ayant une pluralité d'étapes,
et
dans lequel chaque connecteur de refroidissement est réalisé par un trou ou une découpe dans la pluralité d'étapes, dans lequel le connecteur de refroidissement est intégré.

2. Module de batterie selon la revendication 1, dans lequel :
la seconde plaque d'extrémité possède un côté avant et un côté arrière parallèle au côté avant de la seconde plaque d'extrémité ;
la seconde plaque d'extrémité est disposée de sorte que les côtés avant et arrière de la seconde plaque d'extrémité soient perpendiculaires à la direction prédéfinie ; et
le côté avant de la seconde plaque d'extrémité fait face au côté arrière du dernier élément de batterie, lorsque l'on regarde dans la direction prédéfinie.

3. Module de batterie selon la revendication 1 ou 2, dans lequel le second connecteur de refroidissement est intégré à la première plaque d'extrémité, et dans lequel l'axe central longitudinal du second connecteur de refroidissement est orienté perpendiculairement à la direction prédéfinie.

4. Module de batterie selon la revendication 2, dans lequel le second connecteur de refroidissement est intégré à la seconde plaque d'extrémité, et dans lequel l'axe central longitudinal du second connecteur de refroidissement est orienté perpendiculairement à la direction prédéfinie.

5. Module de batterie selon l'une quelconque des revendications 1 à 4, dans lequel chaque connecteur de refroidissement comprend un tube ou un conduit composé d'un matériau étanche au liquide comprenant du caoutchouc, du plastique ou du métal.

6. Module de batterie selon l'une quelconque des revendications 1 à 5, dans lequel l'épaisseur de la première plaque d'extrémité définie comme la distance entre le côté avant et le côté arrière de la première plaque d'extrémité est d'au moins 32 mm, de préférence d'au moins 38 mm, et le plus préférablement de 40 mm ;
et/ou, dans la mesure où la présente revendication dépend de la revendication 2, l'épaisseur de la seconde plaque d'extrémité définie comme la distance entre le côté avant et le côté arrière de la seconde plaque d'extrémité est d'au moins 20 mm, de préférence d'au moins 30 mm, et est le plus préférablement égale à l'épaisseur de la première plaque d'extrémité.

7. Module de batterie selon l'une quelconque des revendications 1 à 6, dans lequel, avec une première direction définie en tant que la direction prédéfinie, une seconde direction définie comme perpendiculaire à la première direction et une troisième direction définie comme perpendiculaire à la première direction et la seconde direction,
chacun des éléments de batterie possède une forme cuboïde ayant des premiers bords parallèles à la première direction, des seconds bords parallèles à la seconde direction et des troisièmes bords parallèles à la troisième direction ;
la première plaque d'extrémité possède une forme cuboïde ayant des premiers bords parallèles à la première direction, des seconds bords parallèles à la seconde direction et des troisièmes bords parallèles à la troisième direction ; et
dans lequel, dans la mesure où la présente revendication dépend de la revendication 2, la seconde plaque d'extrémité possède une forme cuboïde ayant des premiers bords parallèles à la première direction, des seconds bords parallèles à la seconde direction et des troisièmes bords parallèles à la troisième direction.

8. Module de batterie selon la revendication 7, dans lequel, avec la hauteur de chacun des éléments de batterie et de la/des plaque(s) d'extrémité définie comme sa longueur respective le long de la seconde direction,
la hauteur de la première plaque d'extrémité est égale à la hauteur du premier élément de batterie lorsque l'on regarde dans la première direction ; et/ou
dans la mesure où la présente revendication dépend de la revendication 2, la hauteur de la seconde plaque d'extrémité est égale à la hauteur du dernier élément de batterie lorsque l'on regarde dans la première direction.

9. Module de batterie selon la revendication 7 ou 8, dans lequel, avec la largeur de chacun des éléments de batterie et de la/des plaque(s) d'extrémité définie comme sa longueur le long de la troisième direction,
la largeur de la première plaque d'extrémité est égale à la largeur du premier élément de batterie lorsque l'on regarde dans la première direction ; et/ou
dans la mesure où la présente revendication dépend de la revendication 2, la largeur de la seconde plaque d'extrémité est égale à la largeur du dernier élément de batterie lorsque l'on regarde dans la première direction.

10. Module de batterie selon l'une quelconque des revendications 1 à 9, dans lequel le premier profilé d'extrusion est un profilé d'extrusion en aluminium, dans lequel la direction de pression du profilé d'extrusion est perpendiculaire au côté arrière de la première plaque d'extrémité ; et/ou
dans lequel la seconde plaque d'extrémité comprend un second profilé d'extrusion, qui est de préférence un profilé d'extrusion en aluminium, dans lequel la direction de pression du profilé d'extrusion est perpendiculaire au côté avant de la seconde plaque d'extrémité.

11. Module de batterie selon la revendication 10, dans lequel, sur au moins un gradin du premier profilé d'extrusion, au moins un connecteur HT est placé ; et/ou
dans lequel, sur au moins un gradin du second profilé d'extrusion, au moins un connecteur HT est placé.

12. Module de batterie selon la revendication 10 ou 11, dans lequel, sur au moins un gradin du premier profilé d'extrusion, au moins un connecteur BT est placé ; et/ou
dans lequel, sur au moins un gradin du second profilé d'extrusion, au moins un connecteur BT est placé.

13. Module de batterie selon l'une quelconque des revendications 1 à 12,
dans lequel au moins un connecteur BT est disposé sur le côté avant de la première plaque d'extrémité ; et/ou
dans lequel au moins un connecteur BT est disposé sur le côté arrière de la seconde plaque d'extrémité.
